# EUROPEAN PATENT APPLICATION

(11) **EP 4 644 473 A1**
(43) Date of publication of application: **05.11.2025**
(21) Application number: 24174029.9
(22) Date of filing: 03.05.2024
(51) Int. Cl.: C08J 11/12

(54) **LOW ENERGY VISBREAKING RLDPE FILM**

(71) Applicant: Basell Polyolefine GmbH, 50389 Wesseling (DE)
(72) Inventor: MANNEBACH, Gerd, 65926 Frankfurt/M. (DE); ELSAS, Katharina, 65926 Frankfurt/M. (DE); PFEIFFER, Maximilian, 65926 Frankfurt am Main (DE)
(74) Representative: LyondellBasell

(57) **Abstract**

The present disclosure relates to a lower-energy visbreaking process with lower energy-intake of the polymer for visbreaking of low density polyethylene recyclates, derived from film waste material, via visbreaking thermal and mechanical processing conditions in an extruder, performed for at least two different temperatures, greater than 220°C and lower than 340°C. Providing a visbroken LDPE with a low increase in MFR compared to the starting material, and lower increase of density. Resulting in a visbroken LDPE material, showing superior optical performance when processed to film, with second generation gels per cm2. The invention is described in more details in the figures provided, showing the reduction of primary defects and gels derived from impurities in the recyclate enhanced by the visbreaking method, and the effect and appearance of the favorable "second generation gels" providing high quality films. Further the shift of Mw, density and MFR, besides the increase in LCB in accordance with too much energy-intake during processing of the recyclate.

## Description

It has surprisingly been found, that quality of films, derived only from recycled low density polyethylene, containing also LLDPE, can be significantly improved, by applying thermal and mechanical treatment steps over a certain period of time at certain temperatures, at least higher than 220°C and lower than 340°C, after melting and mechanical processing of the recyclate with less energy-intake than known from the state of the art, to remove inhomogeneities, gels and impurities in the LDPE recyclate, to obtain visbroken LDPE recyclate suitable for films. It has further been found that films comprising the visbroken LDPE recyclate show excellent optical performance due to influence and effect of "second generation gels".

### Background of Invention

According to the EU directive for packaging and waste packaging regulation, saying packaging and packaging waste regulation, polymer materials must contain a certain amount of recycled material. For the use of recyclates disadvantages arise when it comes to mechanical properties or quality of products. To obtain polyolefin recyclates of high quality, a lot of effort is being made and various strategies are being developed to improve processability besides quality in products. To be able to recycle and repurpose polyolefins to effectively contribute to sustainability in the plastics industry, also to fulfill the requirements of e.g., the packaging directive of the EU.

Already known from the state of the art are thermal visbreaking processes, implemented in an extruder. A thermal and mechanical treatment conditions in an extruder are applied to convert recycled polyolefins into visbroken material, having a reduced weight average molecular weight. These processes involve subjecting polyolefins to high temperatures, e.g., 370°C and pressures, also in the presence of specific catalysts or additives, to accelerate decomposition of the material. The aim is to break down the long-chain polyolefin molecules into shorter-chain molecules, resulting in a reduction in the polymer's molecular weight, and elevate the viscosity to higher MFRs (WO 2022/271726).

By reducing the molecular weight, visbreaking of LDPE, e.g., can alter its physical properties, such as increasing its melt flow rate (MFR) significantly or improving its processability. This modified LDPE can then be used in various applications where enhanced flow characteristics are desired, such as in extrusion processes for film or pipe manufacturing.

Besides the fact, that the visbreaking technique consumes high amount of energy, when high temperatures are applied, as the well known visbreaking conditions require at least 300 °C when heating and mechanically processing the recyclates. This thermal treatment at elevated temperatures reduces the thermal and mechanical stability of the products, making it more prone to degradation at high temperatures, affecting the final product properties, while the process still consumes a lot of energy as it requires energy-intensive heating and pressurizing of the polymer melt.

Especially for LDPE used in film applications, a high mechanical stability, high quality properties and optical performance suffer when recycled material is applied. As PCR-films typically suffer from poor optical quality, due to impurities, gels and defects, especially as the gel content is a crucial point for determination of film quality, improvements of optical properties in films obtainable by recycled polyolefins are more than desirable.

Furthermore, in the methods described in the state of the art, the viscosity is increased to enhance processability of the visbroken polymer. Unfortunately, these methods have the significant drawback that they cannot be applied to low density polyethylene recyclates because not only the MFR is increased, but also the density of the visbroken material, resulting in poor optical properties when applied in film production.

Therefore, there is a strong need to provide a visbroken material and not increasing the MFR and density too. So, another aspect of the present invention is to obtain visbroken polyethylene having low increase in MFRs and density too much, to produce obtain films in high optical quality using the visbroken LDPE material and with low amount defects and less gels. While improving the optical performance and quality of especially low density polyethylene recyclates for film applications, besides offering high processability, combined with high optical performance in the products. Furthermore, an efficient visbreaking process is in the focus, which helps to save energy, while leading to improved high quality film products without at least with less gels and defects in the structure and can be performed at lower temperatures.

### Summary of the Invention

It has surprisingly been found that the optical performance and quality of films, derived only from visbroken low density polyethylene recyclates can be significantly improved by keeping the MFR and density low, by applying thermal visbreaking treatment for at least two different temperatures.

The present disclosure relates also to a method for processing polyolefin recyclates, in particular low density polyethylene recyclates derived from post consumer waste material, more precisely of waste comprising LDPE film material, by applying mechanical and thermal treatment in visbreaking process steps, performed in an extruder at lower temperatures than known from the state of the art.

It is disclosed a visbreaking method for processing low density polyethylene (LDPE) recyclate disclosed, comprising the steps of:
a) providing a LDPE recyclate; having
   i. a density in the range of from 0.910 g/cm3 to 0.940 g/cm3 (according to ISO 1183),
   ii. a MFR in the range of 1.0 to 3.0 g/10 min (according to ISO 1133, 190°C, 2.16 kg),
   iii. a Mw of 11.000 to 12.000 g/mol measured via GPC (according to ISO 13885-1),
b) adding the LDPE recyclate to an extruder to obtain a visbroken LDPE recyclate melt,
c) subjecting the LDPE recyclate melt to visbreaking conditions performed at least at two different temperatures,
d) obtaining a visbroken LDPE recyclate; having
   i. a density in the range of from 0.920 g/cm3 to 0.930 g/cm3 (according to ISO 1183),
   ii. a MFR in the range of 2.0 to 6.0 g/10 min (according to ISO 1133, 190°C, 2.16 kg),
   iii. a Mw of 7.000 to 10.000 g/mol measured via GPC (according to ISO13885-1).

### Drawings

The invention is described in more detail by incorporation of the Figures, showing different optical performances of films made from recyclate and visbroken LDPE material, depending on different visbreaking conditions.
Figure 1 shows the molar mass distribution and long chain branches per 1000C for the unmodified feedstock (reference; black) and the visbroken products #1; #2 and #3.
Figure 2 shows a picture of films of reference (leftmost), Sample 1 (second left), Sample 2 (second right) and Sample 3 (rightmost).
Figure 3 shows the correlation of the extruder speed and the increase in MFR.

### Detailed Description of the Invention

The present disclosure relates to a method for processing polyolefin recyclates, particularly low density polyethylene ("LDPE") recyclates, derived from film waste material. The process involves implementing visbreaking conditions in the extruder to convert the LDPE recycle into a visbroken LDPE recycle having a reduced weight average molecular weight, but limit the increase of the MFR and density, to obtain visbroken LDPE material which is suitable for film application showing extraordinarily good optical performance without or at least 90 % less gels than the comparative films known from the state of the art.

Surprisingly, with the aim to reduce the amounts of defects and the gel-content in recycled LDPE-feedstocks a new and inventive method for thermal visbreaking was found, providing with less energy intake and generally lower temperatures better results and improved optical film performance. With this method it is possible to reduce the defect count compared to the reference material (LDPE recyclate material) by about 95% whilst keeping the MFR relatively low. Besides not increasing the MFR of the visbroken material too much, and therefore keeping the LCB content at a low level.

In detail, the visbreaking method for processing low density polyethylene (LDPE) recyclate disclosed, comprising the steps of:
a) providing a LDPE recyclate; having
   i. a density in the range of from 0.910 g/cm3 to 0.940 g/cm3 (according to ISO 1183),
   ii. a MFR in the range of 1.0 to 3.0 g/10 min (according to ISO 1133, 190°C, 2.16 kg),
   iii. a Mw of 11.000 to 12.000 g/mol measured via GPC (according to ISO 13885-1),
b) adding the LDPE recyclate to an extruder to obtain a visbroken LDPE recyclate melt,
c) subjecting the LDPE recyclate melt to visbreaking conditions performed at least at two different temperatures,
d) obtaining a visbroken LDPE recyclate; having
   i. a density in the range of from 0.920 g/cm3 to 0.930 g/cm3 (according to ISO 1183)
   ii. a MFR in the range of 2.0 to 6.0 g/10 min (according to ISO 1133, 190°C, 2.16 kg),
   iii. Mw of 7.000 to 10.000 g/mol measured via GPC (according to ISO 13885-1).

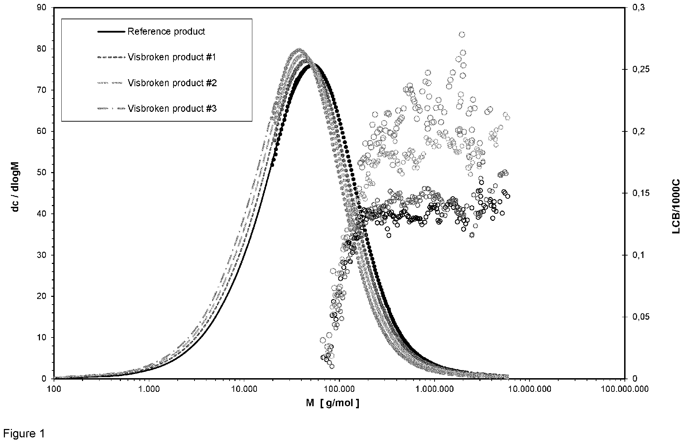

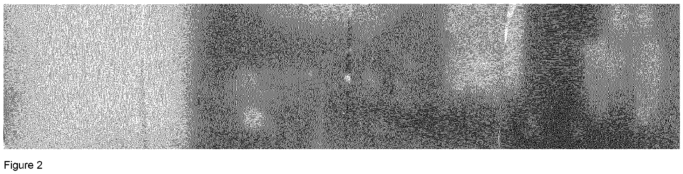

The process disclosed herein provides visbroken low density polyethylene starting from LDPE recyclates comprising low density polyethylene film material, having an initial density in the range from 0.910 g/cm3 to 0.940 g/cm3 (according to ISO 1183), or in the range of 0.915 g/cm3 to 0.935 g/cm3. An initial MFR in the range of 1.0 to 3.0 g/10 min, preferably of 1.5 g/10 min (according to ISO 1133, 190°C, 2.16 kg), having an initial molar mass distribution Mw of 11.000 to 12.000 g/mol measured via GPC (according to ISO 13885-1). Figure 1 shows the shift of the molar mass distribution of the different samples, and further the change of the long chain branches per 1000C for the unmodified base recyclate and the three samples obtained by visbreaking processes, differing in the energy intake. Furthermore, the shift of the whole molecular weight distribution towards lower masses can be seen with increasing energy intake during the visbreaking process. The long chain branching (LCB) content is also affected by the visbreaking conditions, e.g., temperature, time etc., so the highest LCB content is seen for visbreaking product of sample three, which show also the reappearance of gels and defects when a film is produced using this specific material (Sample 3 in Fig. 2).

The LDPE recyclate feedstock is derived from ethylene homopolymers, copolymers of units derived from ethylene and units derived from one or more C3 -C12 alphaolefins, units derived from ethylene and units derived from copolymers of one or more units of alpha mono olefins including polar groups, or mixtures thereof. The rLDPE feedstock may be derived as part of post-consumer recycled polyolefins consisting primarily of film waste material comprising LDPE recyclate

The visbreaking process requires feeding a LDPE recyclate to an extruder to obtain a visbroken LDPE recyclate melt, by thermally and mechanically processing the initial recyclate. One objective of the present invention is, to keep the MFR and density at a relatively low level. To ensure, that the film produced from obtained visbroken material is free of gels, and defects are reduced, the thermal conditions were set to generally lower temperatures with less energy intake in the extruder. That is also the reason, why the process can be seen as a sustainable, energy saving process as better results with less energy can be achieved.

It has been found that high energy-intakes at high and elevated temperatures applied to recyclates in the extruder according to visbreaking processes known from the state of the art, cause a lot of structural damages to the processed polymer, especially when LDPE is processed. As LDPE is characterized by its unique chain structure, which consists of long branched polymer chains. Unlike other types of polyethylene, such as high-density polyethylene (HDPE), low density polyethylene chains have numerous short branches stemming from the main backbone chain. This specific structure due to its branching creates less compact and more irregular arrangements of polymer chains, resulting in a lower density and greater flexibility compared to other polyethylene of higher density. So, if visbreaking conditions are applied to LDPE, the long and branched polymer chains are broken down under the applied heat and pressure. This results in the fragmentation of the polymer chains and a reduction in molecular size. As a consequence, there is a broader distribution of molecular weights and a modification of the physical properties of LDPE, including an increase in viscosity and density. If too much energy is applied then not only the chains and the crosslinked structures will break, but due to the branching of the initial structure gel defects start. Gel defects in LDPE typically consists of small and irregularly shaped particles or agglomerates within the polymer matrix. These defects can also be branches which started to be crosslinked, due to high energy intake.

Besides that, the formation of gels and defects in the structure, especially in recyclates, is typically attributed to the presence of impurities, which are always present in recyclates, degradation products from thermal treatments especially during extrusion processing. These impurities can promote under these conditions crosslinking or branching within the polymer chains in the visbroken LDPE, leading to the formation of gel particles dispersed throughout the material.

Despite that, gels can also result from thermal degradation, oxidation or mechanical stress during processing, which cause molecular chain scission and subsequent recombination into gel containing structures.

Normally, visbreaking processes lead to polymers with high MFR, and reduced Mw of course due to broken polymer chains, but at the same time start crosslinking the chains, which will increase the density, resulting in poor optical performance when it comes to film applications.

To prevent new gels, a reduced and lower energy-intake during extrusion process is applied, causing less damage to the processed polymer.

In more detail, at least two different temperatures are applied to the recyclate melt, at least one treatment is performed at temperature greater than 220°C and at least one treatment at temperatures lower than 340°C, during thermal and mechanical treatment processing of the recyclate melt in the extrusion line. Wherein the order of the single treatment steps is arbitrary and can be renumbered, rearranged, repeated etc. in every possible way. In the extruder specific conditions are applied, at different extruder zones and temperature zones at least one temperature and at least one exposure time for the recyclate in the extruder is used. There is also at least one screw temperature zone, which is set from greater than 150°C to lower than 340°C for the 100 % recyclate LDPE, having an MFR of about 1.5 g/10 min (ISO 1133, 190°C, 2.16 kg).

The extruder typically has a plurality of heating zones. It is to be noted that during the extrusion process, a substantial amount of heat is often generated from shear heating. Thus, the temperature of the polymeric melt in the extruder may be substantially higher than the temperature set in the heating zone(s) at the barrel of the screw and may also be substantially higher than the actual zone temperature readings in the extruder. Further, the actual zone temperature readings in various stages of the extruder may also be higher than the temperatures set at the heating zones. The temperatures referred to herein are the temperatures set in the heating zones. In addition to that, it may be suitable to introduce as less energy as possible to the recyclate in the extruder. Every extruder setup may be used to obtain the disclosed visbreaking process.

A typical setup is having a visbreaking zone and optional devolatilization zone. LDPE recyclate may be added to the visbreaking extruder at the inlet end of the extruder. The LDPE recyclate material is drawn through the extruder by at least one rotating screw drives in the barrel of the visbreaking extruder. The length of the visbreaking extruder can be divided into at least one zone. Each zone may have at least one of the following: a designated pitch on the screw drive, an inlet, for injecting gas, a vent or vacuum connection for expelling gas, for adding or expelling heat means, including, but not limited to pressure, temperature, and/or shear. According to the present disclosure, a visbroken LDPE recyclate is obtained by the process described herein, having a final density in the range from 0.920 g/cm3 to 0.930 g/cm3 (according to ISO 1183), preferably in the range from 0.925 to 0.928 g/cm3 (according to ISO 1183).

The final MFR of the visbroken LDPE is in the range of 1.5-to 6.0 g/10 min (according to ISO 1133, 190°C, 2.16 kg), preferably in the range of 2.0 to 3 g/10 min.

The final Mw is in the range of 7.000 to 10.000 g/mol measured via GPC (according to ISO 13885-1).

Furthermore, directly linked to the Mw is the long chain branching (LCB) of a polymer. In Figure 1 the molar mass distribution as well as the long chain branches per 1000C are plotted. Here the shift of the whole molecular weight distribution towards lower masses can be seen depending on energy intake of mechanical and thermal treatment in the extrusion process. Therefore, the ideal and preferred conditions (please see Table 1, Samples 1 and 2) for the visbreaking process involve lower temperatures than those known in the state of the art. In order to minimize the energy-intake into the polymer and thus obtain the optimal visbroken LDPE suitable for the production of defect-free films. So, to obtain ideal visbroken LDPE, resulting in ideal films with less defects and less gels, a lower long chain branching (LCB) content is advantageous. When the amount of long chain branches per 1000C atoms increase, the optical properties and performance of the film start to suffer, which as demonstrated in Figure 2, for Sample 3. Regarding sample 3, the value of long chain branches is significantly higher, the film produced therefrom shows still high optical performance (please see Figure 2). Compared to sample 1 and 2 the amount of defects and gels is in Sample 3 already increasing, but still sufficiently enough to produce high quality film therefrom.

In Fig. 2 the difference in film quality regarding defects and amount of gels can be seen. Depending on the energy-intake via mechanical and thermal treatment in the extruder during visbreaking processing, the obtained visbroken LDPE material shown when further processed to films exhibit increasing numbers of defects and gels, thus differing in film quality (see Fig 2). The different visuals of the produced films demonstrate clearly the influence of energy-intake and LCB. So, with an increase in energy-intake during visbreaking of the LDPE-recyclate the haziness of the films comprising the visbroken LDPE-recyclate is also reduced.

Referring to Table 1, the total number of defects given, show that there are limitations up to which point the visbreaking is beneficial to the film-quality. Increasing the energy-intake too much will initiate crosslinking which can be seen via amount of defects and an increase in the gel-content.

Furthermore, the disclosed visbreaking method comprises at least one thermal and mechanical treatment step of the recycled LDPE in an extruder, at a temperature higher than 220 °C.

The visbreaking method further comprises at least one thermal treatment step at a temperature lower than 340 °C using any possible extruder.

The treatment is performed using for example a single screw extruder, a corotating twin screw extruder, a counter rotating twin screw extruder, or combinations thereof, wherein the

The process can also be performed using a co-rotating twin screw extruder with a screw temperature profile higher than 220°C for the LDPE recyclate and lower than 340°C.

Besides that, the treatment may be formed by melt blending the LDPE recyclate as powders, flakes, pellets or combinations thereof together directly in a mixer, single or twin-screw extruder or other equipment known to a person skilled in the art; or alternatively, the compositions may be formed by (dry-) blending powders, flakes, pellets or combinations thereof of the recyclate polyolefin (A), at the main hopper or side feeder of a profile or film extruder, or injection molding machine or any other type of polymer processing equipment known to a person skilled in the art and subsequently melt blending in the aforementioned processing equipment. The processing equipment may be the final stage of blending as part of an article fabrication step, such as in the extruder used to melt and convey the composition prior to forming a sheet, pellets, or extruding them further to obtain a film.

In the sense of the present disclosure, the at least one thermal and mechanical treatment step a) and b) of the process are arbitrary and may be described here are not to be understood as final and may further include repetitions of each step or a different sequence of the steps, and can be renumbered, rearranged, repeated in every possible way, to obtain.

In the sense of the present invention, the LDPE recyclate feedstock comprises post-consumer recycled waste, post-industrial recycled waste, or a combination thereof, preferably recycled film material. Preferably comprising at least 98 % non-colored film material, and about 2 % of colored and printed films, derived from all sorts of packaging materials.

According to the invention, the low density polyethylene is 100 % recyclate, derived from a post consumer and/or post industrial or a blend thereof, comprising low density polyethylene (LDPE). The low density polyethylene is derived from a LDPE source, preferably derived from film waste material. Preferably the recyclate comprises less impurities such as polyolefins with higher density, or PP, PVC or the like or other impurities which are comprised in the polyethylene-rich polyolefin, recovered from post-consumer waste, or recovered from a post-industrial waste.

The main focus of the disclosed method is to induce less energy to the recyclate material compared to the state of the art, to ensure causing less damage to the polymer. Application of lower amount of energy during said melt blending process, imparts a specific energy of about 0.01 to about 1 kWh/kg to said polyolefin composition. It is generally desirable during melt of the composition to impart a specific energy of about 0.1 to about 0.5 kilowatt-hours/kilogram (kW h/kg) to the composition. In another embodiment, melt blending is performed in a twin-screw extruder, such as co-rotating twin screw extruder, where the screw temperature is set from about 220°C to about 340°C for the LDPE recyclate. A higher energy introduction leads to and initiates crosslinking of the recyclate, resulting in higher density, more defects, and higher MFR2, as it can be seen from sample 3, shown in Table 1 or also according to Fig. 2, the film shown rightmost in the picture provided gels are already appear, although as optical performance is and a high amount of gels. It appears that for the optical performance of a LDPE film derived from recyclates, its important not only to have the absence of gels, impurities and defects, but also that the haze I optimal. Figure 2 shows that with higher energy intake, gel defects may reappear. However, these gel defects in small quantities can act as a sort of lubricant for the film extrusion process, ensuring that a smooth defect-free film is produced.

The visbroken material which is provided by the method disclosed herein is preferably used for producing films, made from visbroken LDPE recyclate. It is desired that these films are comprising only recyclate material, and still can be applied in the production of film with excellent film properties. The film having less gels comprises visbroken LDPE-based recyclate, visbroken to a MFR (according to ISO 1133, 190°C, 2.16 kg) between 1 to 6 g/10 min, preferably between 1.8 and 3.5 g/10 min, preferably 2 and 3 g/10 min. Only if the MFR is kept at a lower level, the optical performance and quality of the obtained film is sufficiently high.

Furthermore, the visbroken polyolefin obtainable by the disclosed process and method, provides said recycled polyolefin, which has a MFR2 from about 2.0 to 6.0 g/10 min, preferably the MFR2 is in the range of 2.0 to 3.3 g/10 min (according to ISO 1133, 190°C, 2.16 kg). By using the visbreaking process, the molecular weight distribution of the polymer chains is changed. Using the disclosed visbreaking process, the PE-polymer chains are broken or cleaved, resulting in a reduction of molecular size. This process helps to improve the optical performance of the recyclate to modify the properties of the recycled polymer to meet desired specifications for suitable film material and improve its sustainability for various applications. A slight increase in density results from the breaking of polymer chains through visbreaking in LDPE recyclates.

The visbroken LDPE material obtained by the visbreaking method disclosed herein, shows compared to the recycled LDPE starting material, an increase of 120 up to 400 % at a maximum, preferably an increase of 130 to 200%, preferably 134 to 220 %. In one aspect of the invention, the visbroken LDPE can have a MFR increase, (measured according to IS01133, 190° C, 2.16 kg) of at least 5, 10, 15, 20, 25, 30, 35, 40, 45, 50, 55, 60, 65, 70, 75, 80, 85, 90, 100, 105, 110, 115, 120, 125, 130, 135, 140, 145, 150, 155, 160, 165, 170, 175, 180, 185, 190, 200, 225, 250, 275, 300, 325, 350, 375, or 400% compared to the same polyolefin composition without being applied to visbreaking conditions and the process disclosed herein. The MFR increase is ranging from about 5% to about 400% about 20% to about 400%, about 50% to about 400%, about 5% to about 200%, about 15% to about 200%, about 20% to about 200%, about 5% to about 150%, about 10% to about 150%, about 15% to about 150%, or about 30% to about 300%.

Using the visbroken material, a film with less defects can be prepared by the process comprising the steps of, visbreaking a polyolefin polymer, preferably a LDPE recyclate to a MFR2 (according to ISO 1133, 190°C, 2.16 kg) ranges from 1 to 6, and a melting point below about 150 °C, casting the visbroken LDPE recyclate into a film with less gels.

The LDPE recyclate needs to be visbroken by the process described above, having a MFR of the obtained material in the range of 1 to 6. A specific melting point needs to be kept in mind, that the temperature is not higher than 150°C.

Visbreaking conditions include thermal visbreaking. Thermal visbreaking involves temperature, pressure, and mechanical shear sufficient to cause polymer chain scission to predominate over polymer chain branching or cross-linking. In some embodiments, the visbreaking conditions consist of thermal visbreaking in the absence or substantial absence of oxygen at a temperature of at least 180°C above the melting point of LDPE. The casted film prepared from the visbroken LDPE recyclate shows superior optical performance having less gels, compared to the film prepared from the "base" recyclate LDPE.

The film with less defects, comprising the visbroken LDPE recylate, obtained by a visbreaking process as disclosed herein. Fig. 2 shows a comparison of different samples showing how visbreaking improves optical performance. The films show a significant decrease of amounts of gels and defects depending on the applied visbreaking conditions (please see Table 1). Depending on the energy-intake the amount of defects and gels are reduced (Sample 1 and 2), for higher energy-intake (Sample 3) the optical performance is even further improved (see Figure 2, comparison of the film properties) as producing films do not only depend on high quality material, with high homogeneity but also having good processability properties. The produced film comprising sample 3 show clearly that although the amount of gels is higher compared to sample 1 and 2, but surprisingly the film properties are far better as the "second generation gels" influences positively film processing, acting as lubricant during extrusion, and enhances the optical properties (see Figure 2, picture rightmost). Figure 2 is showing the reduction of primary defects (compared to the "non-visbroken" LDPE recyclate) having a lot of defects and gels derived from impurities and inhomogeneities present in the recyclate, which are homogenized by the inventive method disclosed herein, which can be seen in Fig. 2 for Sample 1 and 2. Surprisingly for Sample 3 the amount of defects is significantly higher, but these "second generation gels" have the effect of a significant improvement of the films. So, the appearance of the favorable "second generation gels" is providing high quality films, especially regarding haze and gloss.

Furthermore, films produced from the visbroken LDPE with less gels and less defects are provided, having a haze in the range of less than 8 % and a gloss ranging from 40 to 80 (20°) at least greater than 50 (ASTM D2457), ranging from 80 to 150 at least greater than 100 (60°) (ASTM D2457). In Fig. 2 the visuals of the cast-films created suggest that with increased energy-intake the haziness of the films is also reduced.

In Table 1 the measured number of the defects are given, increasing the extruder speed limits the number of the defects and gels (primary, derived from impurities and inhomogeneities) significantly up to a certain level, until the amount of second generation gels arise and the optical film properties are superior compared to the reference sample or the product / sample 1 or product / sample 2.

Furthermore, the film according to the invention with less primary defects, and increasing amount of "second generation gels" provided, comprising the visbroken LDPE is obtainable by the process disclosed herein, wherein the temperature applied to the LDPE recyclate melt in the extruder ranges between about 220°C and about 340°C. As mentioned before, the energy intake depending on extrusion speed, thermal treatment and mechanical treatment of the LDPE melt during the extrusion process should not be too high, to prevent the material from crosslinking.

### Definitions

As used herein, "LDPE recyclate" means low density polyethylene (LDPE) containing also linear low density polyethylene (LLDPE) recyclate derived from Post Consumer Waste (PCR) mainly consisting of film waste, mainly comprising Low Density Polyethylene from Retail, Distribution & Manufacturing, but also comprising Linear Low Density Polyethylene in various amount derived LLDPE from included stretch wrap. Having a distribution of 98% natural & 2% colored film waste, which has already been processed, at least once by an extrusion process, after end of first life cycle, being processed via collection and sorting, but before being subjected to any visbreaking as disclosed processes herein.

As used herein, "LDPE recyclate" means post-consumer recycled ("PCR") LDPE and/or post-industrial recycled ("PIR") LDPE. Polyolefin recyclate is derived from end products that have completed their life cycle as consumer goods and would otherwise be disposed of as waste (e.g., polyethylene water bottles), or from plastic waste generated as waste from industrial processes. Post-consumer polyolefins include polyolefins already collected in commercial and residential recycling programs, including flexible packaging (cast film, blown film and BOPP film), rigid packaging, blow molded bottles and injection molded containers. Typically, two main polyolefin fractions are obtained through separation steps from other polymers such as PVC, PET, or PS, namely polyethylene recyclate (including HDPE, MDPE, LDPE and LLDPE) and polypropylene recyclate (including homopolymers, random copolymers and heterophasic copolymers). The polyethylene recyclate can be further separated to recover the fraction having LDPE as the main component. In addition to contamination from different polymers, LDPE recyclate often contains other impurities such as PMMA, PC, wood, paper, textiles, cellulose, food, and other organic wastes, many of which cause LDPE recyclate before typical processing and it has an unpleasant odor afterwards.

"LDPE" as used herein means ethylene homopolymers and ethylene copolymers produced in high pressure free radical polymerization and having a density in the range of 0.910 g/cm3 to 0.940 g/cm3.

"Visbreaking conditions" as used herein means thermal visbreaking and/or peroxidative visbreaking. Thermal visbreaking involves temperature, and/or mechanical shear sufficient to cause polymer chain scission instead of polymer chain branching or cross-linking. As used herein, a visbroken polyethylene will have a lower number average and weight average molecular weight, a narrower molecular weight distribution, a slightly higher melt index, and a slightly higher density. The visbreaking conditions consist of thermal visbreaking at different temperatures, a temperature greater than or qual to 220°C, a temperature lower than or equal to 340°C, or in the range of 220°C to 340°C.

As used herein, "visbreaking" means according to the present invention subjecting a low density polyethylene to thermal treatment such that the Mn, Mw and MWD (Mw /Mn) of the so-treated LDPE are reduced, while the MFR (ISO 1133, at 190°C, 2.16 kg) is only slightly increased. Applying high temperatures to polyolefin materials can lead to degradation of the polymer chains and a reduction in the average molecular weight of the polymer. At the same time, the molecular weight distribution narrows. When such methods are intentionally performed to alter the properties of a polymer, these practices are often referred to as "visbreaking."

As used herein, "visbroken LDPE" or "visbroken LDPE recyclate" means the product obtained by subjecting LDPE recyclate derived from the film waste and recyclate feedstock to visbreaking conditions as described herein.

In the sense of the disclosure, "visbroken LDPE recyclate melt" means a LDPE based recyclate which has been thermally processed in an extruder and been molten.

In the sense of the present invention "LDPE-feedstock" means that at the feedstock applied in the process described herein is derived from LDPE post consumer waster, and/or post industrial waste, comprising LDPE film waste material, it can be either provided as flakes inn colorless/ uncolored appearance, as mixture derived from uncolored and colored flakes. Although a lot of efforts have been made to provide "pure" feedstock, comprising only LDPE, impurities such as PP, PET, PVC etc. from polymer side and also traces of TiO2, CaCO3, limonene, and other impurities are also provided.

As used herein, the term "melt blending" and "mechanical treatment" involves the use of shear force, extensional force, compressive force, ultrasonic energy, electromagnetic energy, thermal energy or combinations comprising at least one of the foregoing forces or forms of energy and is conducted in a processing equipment wherein the aforementioned forces are exerted by a single screw, multiple screws, intermeshing co-rotating or counter-rotating screws, non-intermeshing corotating or counter-rotating screws, reciprocating screws, screws with pins, barrels with pins, rolls, rams, helical rotors, or combinations comprising at least one of the foregoing. Melt blending may be conducted in machines such as, single or multiple screw extruders, Buss kneader, Eirich mixers, Farrel Continuous Mixer, Haake mixer, a Brabender internal mixer, helicones, Ross mixer, Banbury mixer, roll mills, molding machines such as injection molding machines, vacuum forming machines, blow molding machines, or the like, or combinations comprising at least one of the foregoing machines.

The term "energy intake" of polymers in general during visbreaking process in an extruder refers to the amount of energy absorbed or utilized by the polymer material as it undergoes visbreaking within an extrusion process. This includes thermal treatment steps, mechanical treatment applied by the extruder, e.g., extruder speed. Visbreaking involves subjecting the polymer to heat and pressure, causing the polymer chains to break down and undergo molecular rearrangements. The energy intake during this process is crucial for controlling the extend of polymer degradation, chain scissoring, and avoid new defects and gels by crosslinking, when it comes to LDPE, optimizing product properties, and ensuring efficient operation of the extrusion equipment.

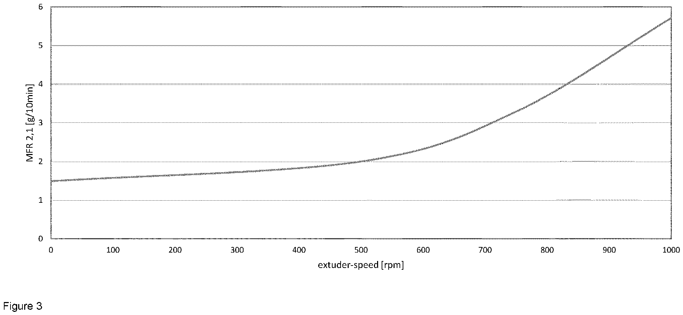

In Figure 3 the correlation of the extruder speed and resulting change of MFR is shown. It makes clear that at a lower extruder speed (see Sample 1, extruder speed of 500) the primary gels break and disappear, and the resulting film already shows good optical properties. By increasing the speed (Sample 2 at 750) the primary defects are less compared to the reference and Sample 1, but by increasing the extruder speed further up to 1000 (Sample 3) the obtained film, comprising the visbroken recyclate is superior compared to the others, due to the fact, that already second generation gels positively affect the processing of the film and the optical performance of the film itself.

The term "second generation gels" refers in the sense of the present disclosure, to a fact, where the polymer under visbreaking conditions as described herein has been homogeneously melted and, with further energy intake the medium length chains now begin to re-connect and crosslink and form tangled structures as slowly crosslinking begins, which can be seen and analyzed via gels in a produced film, e.g.

"Extruder" as used herein in the context of "first extruder", "second extruder" and "third extruder" means a separate extrusion device in some embodiments, while in others in the examples, individual sections within a single extrusion device are meant. In the extruder a certain and specific "extruder-speed" is applied to the samples. In some embodiments, the first extruder and the second extruder are separate machines. In some embodiments, the first extruder and the second extruder are separate sections in a single machine. The method and process disclosed herein might apply only one extruder, but is not limited to, so using a second extruder and a third extruder as separate machines is also disclosed. In some embodiments, the second and third extruders are separate sections in a single machine. In some embodiments, the first, second and third extruders are separate machines. In some embodiments, the first, second and third extruders are separate sections in a single machine. As used herein, "extruder" includes any device or combination of devices capable of continuously processing one or more polyolefins under visbreaking conditions, compounding conditions, melting conditions.

**Table 1: Providing properties of the Reference Product and the Samples/ Product 1-3 obtained under different visbreaking conditions, e.g., increase of extruder speed.**

| | **Reference** | **Sample 1** | **Sample 2** | **Sample 3** |
|---|---|---|---|---|
| Density | 0.9235 | 0.9247 | 0.9249 | 0.9255 |
| MFR 2.16 kg [g/10 min] | 1.49 | 2.0 | 3.29 | 5.71 |
| MFR 5 kg [g/10 min] | 4.78 | 7.01 | 11.3 | 18.8 |
| GPC Mw [g/mol] | 117879 | 100965 | 84586 | 74870 |
| Extruder speed | | 500 | 750 | 1000 |
| Number of defects > 300 µm [1/m2] | 114823 | 4970 | 4784 | 5563 |
| Number of defects > 450 µm [1/m2] | 25885 | 797 | 756 | 837 |
| Total defects | 100 % | 4% | 4% | 5% |

## Claims

1. A visbreaking method for processing low density polyethylene (LDPE) recyclate comprising the steps of:
a) providing a LDPE recyclate; having
i. a density in the range of from 0.910 g/cm3 to 0.940 g/cm3 (according to ISO 1183),
ii. a MFR in the range of 1.0 to 3.0 g/10 min (according to ISO 1133, 190°C, 2.16 kg),
iii. a Mw of 11.000 to 12.000 g/mol measured via GPC (according to ISO 13885-1),
b) extruding the recyclate to obtain a visbroken LDPE recyclate melt,
c) subjecting the LDPE recyclate melt to visbreaking conditions performed at least at two different temperatures,
d) obtaining a visbroken LDPE recyclate; having
i. a density in the range of from 0.920 g/cm3 to 0.930 g/cm3 (according to ISO 1183),
ii. a MFR in the range of 2.0 to 6.0 g/10 min (according to ISO 1133, 190°C, 2.16 kg),
iii. a Mw of 7.000 to 10.000 g/mol measured via GPC (according to ISO 13885-1).

2. The method according to claim 1, wherein the low density polyethylene is 100 % recyclate, derived from a post consumer and/or post industrial or a blend thereof, comprising low density polyethylene (LDPE) and linear low density polyethylene (LLDPE).

3. The method according to any of the preceding claims, wherein the LDPE recyclate feedstock comprises post-consumer recycled waste, post-industrial recycled waste, or a combination thereof, preferably recycled film material.

4. The method according to any of the preceding claims, wherein the method comprising.
a) at least one thermal and mechanical treatment step of the LDPE recyclate at a temperature higher than 220°C in an extruder, and
b) at least one thermal and mechanical treatment step at a temperature lower than 340°C in an extruder,
wherein the order of the steps a) and b) are arbitrary and can be renumbered, rearranged, repeated in every feasible way.

5. The method according to any of the preceding claims, wherein during the thermal and mechanical treatment of the LDPE recyclate the method imparts a specific energy of about 0.01 to about 5 kWh/kg to said LDPE recyclate, to obtain visbroken LDPE recyclate.

6. The method according to any of the preceding claims, wherein the visbroken LDPE recyclate is further processed to a film with less defects, comprising the visbroken LDPE recyclate having a MFR of 1 to 6 g/10 min (ISO 1133, 190°C, 2.16 kg), preferably between 1.8 and 3.5 g/10 min, preferably 2 and 3 g/10 min.

7. A visbroken LDPE obtainable by a method according to any of the preceding claims, wherein said visbroken LDPE recyclate has a MFR of 1 to 6 g/10 min (ISO 1133, 190°C, 2.16 kg), preferably between 1.8 and 3.5 g/10 min, preferably 2 and 3 g/10 min.

8. The visbroken LDPE according to any of the preceding claims, wherein said visbroken LDPE recyclate has an increase in MFR of at least 120 to 400 % at a maximum, compared to the LDPE recyclate, preferably of 130 to 200 %, preferably 134 to 220 %.

9. The visbroken LDPE according to any of the preceding claims, wherein the ratio of the first density of the LDPE recyclate and the second density of the visbroken LDPE is lower than 2.0.

10. A film comprising the visbroken LDPE recyclate.

11. The Film, according to claim 10, comprising the visbroken LDPE recyclate obtainable by the method comprising the steps of:
a) visbreaking a LDPE recyclate to a visbroken LDPE recyclate having
i. a density of from 0.920 g/cm3 to 0.930 g/cm3 (according to ISO 1183),
ii. a MFR (according to ISO 1133, 190°C, 2.16 kg) in the range of 2 to 6, and
iii. a Mw of 7.000 to 10.000 g/mol measured via GPC (according to ISO 13885-1),
iv. a melting point of about 150°C, and
b) casting the visbroken LDPE recyclate into a film.

12. Film, according to any of the preceding claims, comprising the visbroken LDPE recylate, obtainable by a process according to any of the previous claims.

13. Film, according to any of the preceding claims, wherein the film has "second generation gels".

14. Film, according to any of the preceding claims, having.
a) "second generation gels",
b) a haze less than 8 %, and
c) a gloss ranging from 40 to 80 (20°), preferably greater than 50 (ASTM D2457), ranging from 80 to 150, preferably greater than 100 (60°) (ASTM D2457).

15. Film, according to any of the preceding claims, wherein the at least one temperature applied to the LDPE recyclate in the extruder is between 220 °C and 340 °C.
